# EUROPÄISCHE PATENTSCHRIFT

(11) **EP 3 844 425 B1**
(45) Veröffentlichungstag und Bekanntmachung des Hinweises auf die Patenterteilung: **21.09.2022**
(21) Anmeldenummer: 19772977.5
(22) Anmeldetag: 15.08.2019
(51) Int. Cl.: F16J 15/3232, F16J 15/3252, F16J 15/3276, F16J 15/3268

(54) **RADIALWELLENDICHTUNG**
RADIAL SHAFT SEAL
JOINT RADIAL D'ÉTANCHÉITÉ D'ARBRE

(30) Priorität: 01.09.2018 DE 102018006945
(43) Veröffentlichungstag der Anmeldung: 07.07.2021
(73) Patentinhaber: VR Automotive Dichtungssysteme GmbH, 98673 Auengrund-Crock (DE)
(72) Erfinder: SCHAUB, Martin, 98646 Hildburghausen (DE); HÖHN, Bernd, 98646 Hildburghausen (DE)
(86) Internationale Anmeldenummer: PCT/DE2019/000223
(87) Internationale Veröffentlichungsnummer: WO 2020/043226

(56) Entgegenhaltungen:
- EP-A1- 2 817 539
- EP-A2- 1 004 801
- JP-A- 2009 068 643
- US-B2- 9 695 935

## Beschreibung

Die Erfindung betrifft eine Radialwellendichtung zur Abdichtung einer, aus einem mit einem fluiden Medium beaufschlagten Raum herausgeführten rotierenden Welle, mit einem Dichtungsgehäuse, mindestens einem im Dichtungsgehäuse angeordneten, mittels einer Dichtlippe an der Welle dichtend anliegenden ringförmigen Dichtkörper, und mindestens einen den/die Dichtkörper im Dichtungsgehäuse positionierenden ringförmigen, metallischen Stützkörper, zur Abdichtung eines mit Flüssigkeit gefüllten Innenraumes gegenüber einem Außenraum, vorzugsweise der Atmosphäre.

Einsatzbereiche solcher Wellendichtungen sind der Maschinen-, der Apparate- und der Kraftfahrzeugbau, wie zum Beispiel die Abdichtung der Antriebswellen von Kühlmittelpumpen gegenüber dünnflüssigen, wasserbasierenden Kühlmedien mit leicht schmieren Zusätzen.

Die DE 36 02 500 A1 offenbart eine Radial-Öldichtung, welche zwischen einer Gehäusebohrung und einer Drehwelle eingesetzt wird, um dort ein in einem Gehäuse befindliches Fluid abzudichten. Die Dichtung besteht aus einem ersten Dichtungsring mit einer Gummi-Dichtlippe, die mittels einer am Dichtungsring radial oberhalb der Gummi-Dichtlippe angeordneten Schnurfeder gegen die Welle verspannt ist, und abdichtend direkt an der Drehwelle anliegt, und einem zweiten Dichtungsring mit einer Kunstharz-Dichtlippe, der an der Luftseite des ersten Dichtungsrings und diesem benachbart angeordnet ist. Die Kunstharz-Dichtlippe erstreckt sich entlang der Rückseite der Gummi-Dichtlippe und steht auch mit der Drehwelle in dichtender Berührung. An der Luftseite des zweiten Dichtungsrings und diesem benachbart ist ein biegesteifer Verstärkungsring angeordnet. Dieser Verstärkungsring ist entlang eines gebogenen Abschnitts der Kunstharz-Dichtlippe gekrümmt, um die Rückseite dieses gebogenen Abschnitts abzustützen. In der Gehäusebohrung ist zudem ein Außenring angeordnet, welcher die radial außenliegenden Abschnitte des ersten und des zweiten Dichtungsrings sowie des Verstärkungsrings fest fixiert.

Aus der EP 2817539 B1 ist eine weitere derartige Radialwellendichtung mit den eingangs genannten Merkmalen bekannt. Bei dieser Bauform handelt es sich um eine praxisbewährte Lösung der Anmelderin mit zwei ringförmigen Dichtkörpern, einem aus einem Kunststoff und einem aus einem Elastomer, die in einem separaten aus Edelstahlblech gefertigten Dichtungsgehäuse voneinander, durch ein mittels eines Presssitzes im Dichtungsgehäuse fest angeordneten, metallischen, ringförmigen Drehteil, einem Stützkörper, beabstandet angeordnet sind. Diese ringförmigen Dichtkörper sind mit Dichtlippen versehen, die an einer auf der Welle mit Presspassung aufgeschobenen Laufhülse dichtend anliegen.

Charakteristisch für diese Bauform ist, dass jeweils beide der Dichtlippen in ihrem an der Welle bzw. der Laufhülse anliegenden Bereich, stets einen zur Druckseite hin ausgeformten flächigen Dichtzylinder ausbilden, zumindest der Dichtkörper aus dem Elastomer weist eine am Außenumfang des Dichtzylinders angeordnete Außennut auf, in der eine Schnurfeder angeordnet ist, die den Dichtzylinder mit der zugehörigen Dichtlippe gegen die drehfest auf der Welle angeordnete Laufhülse presst, um einerseits bei rotierender Welle die Leckageverluste zu minimieren, und andererseits Stillstandsleckagen zu vermeiden.

Hieraus resultieren aber Leistungsverluste, welche auf die Reibungsverluste an den mittels der Schnurfeder/n vollflächig an die Laufhülse angepressten Dichtzylinder der jeweiligen Dichtlippen zurückzuführen sind.

Gemäß der EP 2817539 B1 besteht der druckseitig (wasserseitig) angeordnete ringförmige Dichtkörper aus einem Elastomer und der luftseitig angeordnete Dichtkörper aus einem Kunststoff, vorzugsweise aus Polytetrafluorethylen (PTFE).

Die zur Lagesicherung der beiden Dichtkörper im Dichtungsgehäuse Einsatz findende Stützkörper sind ringförmige, metallische Drehteile, deren Fertigung zwangsläufig einen relativ hohen Fertigungsaufwand erfordert.

Zur Anordnung des luftseitigen Dichtkörpers, wird in der EP 2817539 B1 ein axialer Preßsitz des Dichtkörpers aus Kunststoff, wie Polytetrafluorethylen (PTFE), zwischen dem Dichtungsgehäuse und dem Stützkörper mit axialer Sicherung des Stützkörpers durch mechanische Einkerbungen von außen vorgeschlagen.

Bei der Montage der in der EP 2817539 B1 vorbeschriebenen Lösung, müssen, um eine zuverlässige radiale Lagesicherung des luftseitig angeordnete Kunststoff-Dichtkörpers aus Polytetrafluorethylen (PTFE) gegen sein "Mitdrehen" mit der Welle zu gewährleisten, bei der Montage des den Kunststoff-Dichtkörper im Dichtungsgehäuse verspannenden Stützkörpers über den Elastomerdichtkörper sehr hohe Montagekräfte aufgebracht werden, die in der Produktion zur Beschädigung des Elastomerdichtkörpers und damit zu Ausschuss führen. Um jedoch bei der Fertigung der Dichtungen nach der EP 2817539 B1 zwingend das "Mitdrehen" des Kunststoffdichtkörpers mit der Welle zu vermeiden, wird bei der Herstellung dieser Bauform eine gewisse "Ausschussquote" billigend in Kauf genommen.

Das nach längerer Einsatzzeit eintretende, teilweise Mitdrehen des Dichtkörpers aus Polytetrafluorethylen (PTFE), führt zu einer kontinuierlichen Zerstörung dieses Dichtkörpers, und hat dann daraus resultierende Leckagen zur Folge.

Ein weiterer Nachteil der vorgenannten Lösung besteht aber auch darin, dass insbesondere bei Einsatz von neuartigen Kühlflüssigkeiten (schwach schmierenden Medien) ab Drehzahlen von über 7.000 U/min beim wasserseitig angeordneten Elastomerdichtkörper, der Flüssigkeitsfilm zwischen der Welle/Hülse und dem Dichtzylinder abreißt, so dass, wie in Testreihen auf Prüfständen zuverlässig nachgewiesen werden konnte, bereits ab ca. 7.500 U/min ein sehr deutlicher Temperaturanstieg an der jeweiligen Dichtung eintritt, der eine thermische Schädigung des Kühlmittels mit einer daraus resultierenden Belagsbildung auf der Wellenoberfläche (z.B. Silikate aus dem thermisch geschädigten Kühlmittel) und daraus resultierende Leckagen zur Folge hat.

Auch in der JP 10318377 A und der JP 2009068643 A werden Radialwellendichtungen mit zwei unterschiedlichen Dichtkörpern, d.h. einem aus einem Elastomer und einem zweiten aus einem Kunststoff vorbeschrieben. Bei der Lösung nach der JP 10318377 A wird die Dichtfläche des druckseitig/wasserseitig angeordneten Elastomerdichtkörpers, ebenso wie bei der eingangs beschriebenen Bauformen auch, mittels einer im Bereich oberhalb der Dichtfläche angeordneten Schnurfeder, hier direkt gegen die Welle, verspannt.

Auch diese Lösung weist daher zwangsläufig, die bereits in Verbindung mit dem Einsatz der Schnurfedern bei den Eingangs beschriebenen Lösungen erläuterten Nachteile, wie eine aus der Umfangskraft der Schnurfeder am Außenumfang der Elastomerdichtfläche resultierende erhöhte Reibung im Bereich der Elastomerdichtfläche auf, welche dann zwangsläufig mit den Reibungsverlusten einhergehende Temperaturerhöhungen und auch die damit verbundene Leistungsverluste zur Folge hat.

Ein wesentliches, gemeinsames Merkmal der beiden letztgenannten Lösungen ist, dass die jeweiligen Elastomerdichtkörper stets auf Ringbundscheiben aufvulkanisiert sind. Dies erfordert bei beiden Bauformen einen zusätzlichen Vulkanisierprozess, wodurch mit deren Herstellung zwangsläufig auch ein deutlich erhöhter Fertigungsaufwand, aber auch ein deutlich erhöhter Aufwand beim Recycling verbunden ist.

Bei beiden Lösungen wird die Vorspannung des aufvulkanisierten Elastomers genutzt um die zweite, die luftseitig angeordnete Dichtung aus einem Kunststoff, beispielsweise eine PTFE Dichtung in der jeweiligen Ringbundscheibe zu verspannen.

Zur Endmontage der jeweiligen Dichtung wird gemäß der JP 10318377 A in die Ringbundscheibe mit dem aufvulkanisierten Dichtkörper, zwischen dem luftseitigen Bund der Ringbundscheibe, d.h. der Rückwand und dem Elastomerdichtkörper, die zweite Dichtung eingelegt und im Bereich des Außenumfangs des Elastomerkörper mittels eines Stützringes gegen den Elastomerkörper verspannt.

Bei der Lösung nach der JP 10318377 A laufen zudem die Dichtzylinder beider Dichtungen direkt auf der Welle und sind allein dadurch einem erhöhten Verschleiß unterworfen.

Die Lösung nach der JP 2009068643 A weist gegenüber der Lösung nach der JP 10318377 A zudem einen deutlich schmaleren Ringbund auf.

Daher ist bei dieser Lösung zwingend eine weitere, d.h. eine zweite Ringscheibe zwischen dem Ringbund und der luftseitigen Kunststoff-Dichtung erforderlich um die luftseitige Kunststoff-Dichtung sicher in der Ringbundscheibe gegen das an der Ringbundscheibe aufvulkanisierte Elastomer zu verspannen.

Da jedes Elastomer einen sogenannten Druckverformungsrest (DVR) besitzt, führt dies dazu, dass die Vorspannung der Elastomerdichtung über die Laufzeit/Einsatzzeit der Dichtung geringer wird.

Dieser Vorspannungsverlust ist sehr stark temperaturabhängig und geht daher um so schneller, je höher die Temperatur ist unter der die Dichtung eingesetzt wird.

Daraus resultiert zwangsläufig, dass beim Einsatz dieser Dichtungen in Wasserpumpen für Kraftfahrzeuge, aufgrund der dort herrschenden Temperaturen von -40°C bis +135°C mit steigender Einsatzzeit die Vorspannung des Elastomers nicht mehr ausreicht um ein, in Verbindung mit der EP 2817539 B1 bereits erläutertes, "Mitdrehen" der luftseitigen Dichtung aus Kunststoff mit der Welle in der Ringbundscheibe zu unterbinden.

Bei den in der JP 2009068643 A eingesetzten Dichtungen handelt es sich ausschließlich um reine Lippendichtungen an deren Dichtkörper keine Schnurfedern angeordnet sind.

Auch bei der Lösung nach der US 9695935 B2 werden ebenso wie bereits gemäß der Lösung nach der JP 2009068643 A zwei ringförmige Dichtkörper eingesetzt, deren Dichtlippen nicht durch Schnurfedern belastet werden, die jedoch nicht, wie bei der Lösung nach der JP 2009068643 A, direkt an der Welle, sondern an einer Laufhülse anliegen, und dabei im anliegenden Bereich, stets einen zur Druckseite hin ausgeformten flächigen Dichtzylinder ausbilden. Auch bei der Lösung nach der US 9695935 B2 ist ebenfalls in einem Dichtungsgehäuse luftseitig, als Rückwand, wiederum ein schmaler Ringbund angeordnet. Mit diesem Ringbund werden wiederum zwei Stützringe, einer luftseitig und einer wasserseitig, drehfest verbunden.

Zwischen diesen wird der luftseitig angeordnete mit einer Dichtlippe versehene Dichtkörper aus Kunststoff nun dadurch verspannt, dass der zweite, wasserseitig angeordnete Elastomerdichtkörper zwischen dem wasserseitigen Stützring und dem Dichtungsgehäuse separat eingepresst und anschließend, mittels eines weiteren zwischen dem Elastomerdichtkörper und dem Dichtungsgehäuse angeordneten Bauteils, einem Adapter, elastisch verspannt in seiner Lage gesichert wird.

Ein sehr wesentlicher Nachteil dieser Lösung besteht nun in der eben erläuterten elastischen Lagesicherung des Adapters.

Das bereits beschriebene Nachlassen der Vorspannung jeder Elastomerdichtung über die Laufzeit/Einsatzzeit in Wasserpumpen bei Kraftfahrzeuge führt mit steigender Einsatzzeit dazu, dass infolge des Nachlassens der Vorspannung des Elastomers, bei dieser Bauform dann der Adapter aus seiner elastischen Verspannung herausfällt, und dadurch die Dichtung (die dann auf der Wellenhülse "auseinander fällt") ihre Dichtwirkung verliert.

Die Lösung nach der JP 2009068643 A wie auch die Lösung nach der US 9695935 B2 besitzen stets einen wasserseitig/druckseitig angeordneten Elastomerdichtkörper mit einer Elastomerdichtlippe und einen diesem luftseitig benachbart angeordneten Kunststoffdichtkörper mit einer Kunststoffdichtlippe. Zwischen beiden Lippen wird eine geringe Menge handelsüblichen Schmierfettes eingebracht, welches zur Kurzzeitschmierung der Elastomer-Lippe dient.

Auch bei diesen Lösungen, bei denen die Elastomerdichtlippe flächig an der Welle bzw. der Laufhülse anliegt, tritt in Verbindung mit den neuen Kühlflüssigkeiten (schwach schmierenden Medien) wie bereits im Zusammenhang mit den eingangs analysierten Lösungen erläutert, bei höheren Drehzahlen, d.h. bei Drehzahlen von über 7.000 U/min, wiederum nach bereits kurzer Einsatzzeit ein erhöhter Verschleiß auf, der auf Mischreibungszustände bis hin zu einem Trockenreibungsverschleiß zurückzuführen ist und der zu einer Schädigung durch "Verbrennen" der Lippendichtungen und zu einer thermischen Schädigung des Kühlmittels mit den daraus resultierenden Leckagen führt.

Darüber hinaus haben auch die reinen Elastomerlippendichtungen (d.h. die ohne eine Schnurfeder auf der wasserseitigen Dichtlippe), ob die gemäß der Lösung nach der JP 2009068643 A oder die gemäß der Lösung nach der US 9695935 B2 den Nachteil, dass jedes Elastomer einen Druckverformungsrest (DVR) besitzt, der dazu führt, dass die Vorspannung in Abhängigkeit von der Höhe der Einsatztemperatur und der Laufzeit geringer wird, wodurch bei der Arbeitstemperatur des Kühlmittels und mit zunehmender Laufzeit die Vorspannung der Dichtlippe gegenüber der Welle oder der Laufhülse sich deutlich reduziert.

Dadurch kommt es an der wasserseitigen Dichtlippe teilweise zu einem Eigenschwingverhalten und einem damit verbundenen Quietschen der Dichtung und bei fehlendem Systemdruck, d.h. bei stehendem Motor, zu Leckagen und infolge dessen zu daraus resultierenden Reklamationskosten. Der Sachverhalt der Leckage im Stillstand führt aber auch zu einer deutlichen Reduzierung der Unterdruckstabilität.

Diese Unterdruckstabilität ist zwar bei Neufahrzeugen stets gegeben, und ermöglicht, dass die Erstbefüllung der Kühlsysteme derart erfolgen kann, dass das Kühlsystem mittels einer Saugpumpe evakuiert, auf Dichtheit geprüft, und anschließend unter Nutzung des erzeugten Unterdruckes luftfrei mit Kühlmittel befüllt werden kann.

Selbstverständlich haben die beschriebenen Verschleißerscheinungen an den Dichtlippen keine Auswirkungen auf die Erstbefüllung.

Da jedoch bereits viele Werkstätten im Rahmen von Instandsetzungs- bzw. Instandhaltungsarbeiten auch mit Unterdruck luftfrei befüllen, führen die oben erläuterten Verschleißerscheinungen mit Stillstandsleckagen dazu, dass in Abhängigkeit von der Laufzeit und den jeweiligen Einsatzbedingungen, über z.B. undichte verschlissene Dichtlippen mehr oder weniger Luft, mit den daraus resultierenden Nachteilen, in den Kühlkreislauf gelangt.

Die Aufgabe der Erfindung besteht darin eine neuartige Radialwellendichtung zur Abdichtung einer aus einem mit einem fluiden Medium gefüllten Raum herausgeführten rotierenden Welle gegenüber der Atmosphäre zu entwickeln, welche auch in Kühlmittelpumpen, unter Einsatz von dünnflüssigen, wasserbasierenden Kühlmitteln mit leicht schmierenden Zusätzen, die vorgenannten Nachteile des Standes der Technik beseitigen soll, und dabei gleichzeitig die Reibungsverluste wie auch die Leckageverluste gegenüber dem gegenwärtigen Stand der Technik deutlich senken soll, die Zuverlässigkeit wie auch die Lebensdauer deutlich erhöhen soll, zudem Stillstandsleckagen zuverlässig vermeiden soll, so dass selbst nach längerer Einsatzzeit noch eine "luftfreie" Vakuumbefüllung von Kühlmittelpumpen möglich sein soll, gleichzeitig soll die neuartige Radialwellendichtung zudem fertigungstechnisch sehr einfach herstell- und montierbar sein und dadurch die Fertigungs- und Montagekosten in der Endfertigung deutlich reduzieren.

Erfindungsgemäß wird diese Aufgabe durch eine Radialwellendichtung nach den Merkmalen des Hauptanspruches der Erfindung gelöst.

Vorteilhafte Ausführungen, Einzelheiten und Merkmale der Erfindung ergeben sich aus den Unteransprüchen sowie der nachfolgenden Beschreibung der erfindungsgemäßen Lösung an Hand eines Ausführungsbeispieles in Verbindung mit Zeichnungen die den Einsatz der erfindungsgemäßen Lösung in mehreren Dichtungsgehäusebauformen zeigt.

Nachfolgend wird die Erfindung an Hand eines Ausführungsbeispieles in Verbindung mit 12 Figuren näher erläutert.

Es zeigen dabei:
- Figur 1 :: die erfindungsgemäße, in einem Dichtungsgehäuse 5 mit Montagebund, für einen Dichtungssitz mit einem Bohrungsdurchmesser von 20 mm, angeordnete, Radialwellendichtung im eingebauten Zustand, d.h. nach dem Einbau in das Arbeitsgehäuse 2 einer Kühlmittelpumpe, in der Seitenansicht im Schnitt;
- Figur 2 :: die in das Dichtungsgehäuse 5 eingesetzten Metallbauteile der erfindungsgemäßen Lösung, d.h. der Stützkörper 13 und die Elastomerdichtkörperpositionierungskappe 23, ohne Dichtkörper und ohne Dichtungsgehäuse 5, jedoch zur Veranschaulichung der späteren Montage miteinander durch Presssitz gefügt, in der Seitenansicht im Schnitt;
- Figur 3:: die erfindungsgemäße Radialwellendichtung während der Montage, mit dem in einem Dichtungsgehäuse 5 mit Montagebund, für einen Dichtungssitz mit einem Bohrungsdurchmesser von 20 mm, durch den Stützkörper 13 lagesicher positionierten Kunststoffdichtkörper 9 mit eingesetzter Laufhülse 12, vor der Endmontage, in der Seitenansicht, im Schnitt;
- Figur 4:: die Draufsicht auf den in der Figur 3 dargestellten Montagezustand der erfindungsgemäßen Radialwellendichtung;
- Figur 5:: die in der Figur 1 dargestellte in einem Dichtungsgehäuse 5 mit Montagebund, für einen Dichtungssitz mit einem Bohrungsdurchmesser von 20 mm, angeordnete Radialwellendichtung im Endmontagezustand/ Auslieferungszustand, d.h. vor dem Einbau in ein Arbeitsgehäuse 2 einer Kühlmittelpumpe, in der Seitenansicht im Schnitt;
- Figur 6:: Einzelheit X der erfindungsgemäßen Radialwellendichtung gemäß Figur 5;
- Figur 7:: Einzelheit Y der erfindungsgemäßen Radialwellendichtung gemäß Figur 5;
- Figur 8:: die in einem Dichtungsgehäuse 5 ohne Montagebund, für einen Dichtungssitz mit einem Bohrungsdurchmesser von 20 mm, angeordnete, erfindungsgemäße Radialwellendichtung im Endmontagezustand/Auslieferungszustand;
- Figur 9:: die in einem Dichtungsgehäuse 5 mit Montagebund, für einen Dichtungssitz mit einem Bohrungsdurchmesser von 30 mm, für Gehäuse mit geringer Materialstärke, d.h. für geringe Bauraumtiefe, angeordnete, erfindungsgemäße Radialwellendichtung im Endmontagezustand/Auslieferungszustand;
- Figur 10:: die in einem Dichtungsgehäuse 5 mit Montagebund, für einen Dichtungssitz mit einem Bohrungsdurchmesser von 30 mm, angeordnete, erfindungsgemäße Radialwellendichtung im Endmontagezustand/ Auslieferungszustand;
- Figur 11:: den Temperaturverlauf über die Drehzahl bei der Radialwellendichtung nach der EP 2817539 B1;
- Figur 12:: den Temperaturverlauf über die Drehzahl bei der erfindungsgemäßen Radialwellendichtung;

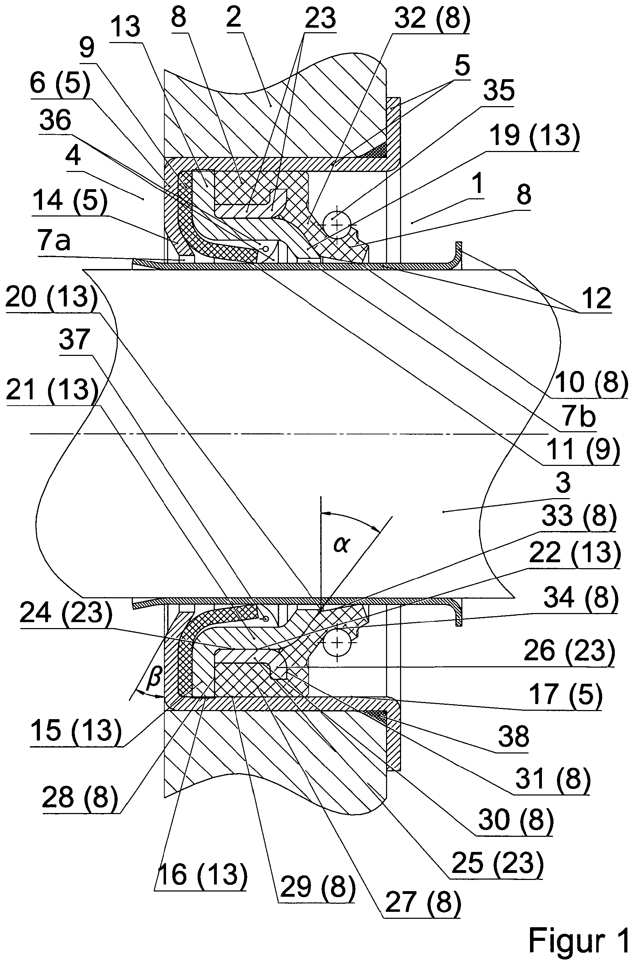

Die Figur 1 zeigt die erfindungsgemäße, in einem Dichtungsgehäuse 5 mit Montagebund, für einen Dichtungssitz mit einem Bohrungsdurchmesser von 20 mm, angeordnete, Radialwellendichtung im eingebauten Zustand, in einer Kühlmittelpumpe, in der Seitenansicht im Schnitt.

Die erfindungsgemäße Radialwellendichtung zur Abdichtung einer aus einem mit einem fluiden Medium gefüllten Druckraum 1 eines Arbeitsgehäuses 2 herausgeführten rotierenden Welle 3 gegenüber dem Außenraum 4, der Atmosphäre, mit einem in einer Bohrung des Arbeitsgehäuses 2 angeordneten metallischen Dichtungsgehäuse 5 mit einer Rückwand 6 und einer in dieser Rückwand 6 angeordneten Wellendurchtrittsbohrung 7a, zeichnet sich dadurch aus, dass im Dichtungsgehäuse 5 druckraumseitig ein Elastomerdichtkörper 8 mit einer Elastomerdichtlippe 10 und außenraumseitig ein Kunststoffdichtkörper 9 mit PTFE und einer Kunststoffdichtlippe 11 derart angeordnet sind, dass diese Dichtlippen direkt an der Welle 3, oder wie in diesem Ausführungsbeispiel dargestellt, an einer auf der Welle 3 drehfest angeordneten Laufhülse 12 anliegen, wobei die beiden Dichtkörper, der Elastomerdichtkörper 8 und der Kunststoffdichtkörper 9, in ihrer Lage gegenüber dem Dichtungsgehäuse 5 mittels mindestens eines mit einer ringförmigen Wellendurchtrittsbohrung 7b versehenen metallischen Stützkörpers 13 exakt lagepositioniert sind.

Wesentlich ist, dass im Bereich der Wellendurchtrittsbohrung 7a an der Rückwand 6, ein kegelstumpfförmig in Richtung des Druckraumes 1, unter einem Anlagekegelwinkel β, der im Bereich von 25° bis 38° geneigter Dichtkörperanlagebund 14 angeordnet ist.

In den hier in den Ausführungsbeispielen beschrieben Bauformen der erfindungsgemäßen Lösung liegt Anlagekegelwinkel β, im Bereich von 25° bis 28°. Der unter dem Anlagekegelwinkel β geneigte Dichtkörperanlagebund 14 bewirkt eine gesollte Verformung des Kunststoffdichtkörpers 9, der im vorliegenden Ausführungsbeispiel aus Polytetrafluorethylen (PTFE) besteht, in Richtung des Druckraumes 1, so dass er selbst unter druckraumseitiger Druckbeaufschlagung seine optimale Abdichtgeometrie beibehält, wodurch der Verschleiß der Kunststoffdichtlippe 11 des Kunststoffdichtkörper 9 minimiert, und der sogenannten "Trompeteneffekt" verhindert wird.

Der unter dem Anlagekegelwinkel β geneigte Dichtkörperanlagebund 14 bewirkt, dass unabhängig vom anliegenden Innendruck die Anlagefläche der Kunststoffdichtlippe 11 nahezu konstant bleibt, so dass gleichermaßen wie der Verschleiß auch die Reibungswärme an der Dichtstelle und damit auch die Reibungsverluste minimiert werden.

Kennzeichnend ist auch, dass am Stützkörper 13 ein Stützkörpersteg 15 mit einem zylindrischen Stützkörperstegaußenrand 16 angeordnet ist, wobei der Durchmesser des Stützkörperstegaußenrands 16 gegenüber dem Durchmesser der Innenwand 17 des Dichtungsgehäuses 5 ein Übermaß aufweist, so dass der Stützkörper 13, welcher im Endmontagezustand den Kunststoffdichtkörper 9 gegen die Rückwand 6 presst, im Dichtungsgehäuse 5 mit Presssitz gefügt ist, wobei der Stützkörper 13 zudem beispielsweise mittels einer/mehrerer im Randbereich, zwischen dem Stützkörper 13 und dem Dichtungsgehäuse 5, angeordneten Schweißnaht/Schweißnähte 18 im fest eingepressten (mit Presspassung gefügten) Zustand somit nicht nur kraftschlüssig sondern zudem auch noch mit dem Dichtungsgehäuse 5 stoffschlüssig verbunden ist.

In den hier beschriebenen Ausführungsbeispielen handelt es sich bei den zeichnerisch dargestellten Schweißnähten 18 um Laserschweißnähte.

Dadurch ist eine hohe Lagesicherheit dieses fest im Dichtungsgehäuse 5 fixierten, d.h. eingepressten/verspannten und in diesem verspannten Zustand nachfolgend zudem noch (laser-) verschweißten, Stützkörpers 13 gewährleistet. Dabei bewirkt der Presssitz, dass der Kunststoffdichtkörper 9 lagesicher gegen die Rückwand 6 verspannt ist, so dass die dadurch bewirkte Verdehsicherheit des Kunststoffdichtkörpers 9 eine hohe Zuverlässigkeit dieser Dichtung über die gesamte Einsatzdauer gewährleistet.

Durch die zusätzliche stoffschlüssige Verbindung mittels (Laser-) Verschweißung wird diese Sicherheit noch um ein Vielfaches erhöht, so dass der (laser-)verschweißte Stützkörpers 13 sehr hohe Zug-, Druck-, Verdreh- und Biegebeanspruchungen aufzunehmen vermag.

Erfindungsgemäß ist aber auch, dass im Bereich der Wellendurchtrittsbohrung 7b des Stützkörpers 13, am Stützkörper 13 ein kegelstumpfförmig in Richtung des Druckraumes 1 unter einem Anpresskegelwinkel α im Bereich von 34° bis 39° geneigter Stützsteganpressbund 19 angeordnet ist, der an seinem freien, druckraumseitigen Ende einen Stützbundrand 20 aufweist, der eine sichere und zuverlässige, optimale Abstützung des Elastomerdichtkörpers 8 zur Gewährleistung einer hohen Dichtwirkung bei minimalen Reibungsverlusten ermöglicht. Im vorliegenden Ausführungsbeispiel beträgt der Anpresskegelwinkel α = 36,8 °.

Erfindungswesentlich ist weiterhin, dass zwischen dem Stützkörpersteg 15 und dem Stützsteganpressbund 19 am Stützkörper 13 ein Positionierzylinder 21 mit einem Positionierzylinderaußenmantel 22 angeordnet ist, und dass auf dem Positionierzylinderaußenmantel 22 mittels Presssitz ein zylindrischer Lagesicherungskappeninnenmantel 24 einer Elastomerdichtkörperpositionierungskappe 23 angeordnet ist, welche aus einer Zylinderkappe 25 besteht, an der druckraumseitig starr ein Dichtkörperaufnahmesteg 26 angeordnet ist, und dass der Elastomerdichtkörper 8 einen Dichtkörperpositionierzylinder 27 aufweist, der mit seinem Innenmantel 30 auf der Zylinderkappe 25 radial so verspannt ist, dass er gleichzeitig mittels einem, am Innenmantel 30 des Elastomerdichtkörpers 8 angeordneten, dem Dichtkörperaufnahmesteg 26 zugeordneten, Hinterschnitt 31 am Dichtkörperaufnahmesteg 26 eingeknüpft ist, und dass der auf der Elastomerdichtkörperpositionierungskappe 23 angeordnete Elastomerdichtkörper 8 im Endmontagezustand mit seiner Stirnseite 28 am Stützkörpersteg 15 so anliegt, dass der am Dichtkörperpositionierzylinder 27 angeordnete Außenmantel 29 gleichzeitig im Dichtungsgehäuse 5 elastisch verspannt ist.

Die dabei während der Montage wie auch im Dauerbetrieb auftretenden hohen Beanspruchungen des im Dichtungsgehäuse 5 montierten Stützkörpers 13, werden durch dessen erfindungsgemäße stoff- und kraftschlüssige Anordnung zuverlässig in das Dichtungsgehäuse 5 übertragen.

Gleichzeitig bewirkt die erfindungsgemäße Lösung den Einsatz von kostengünstigen Stanzteilen für den Stützkörper 13 und die Elastomerdichtkörperpositionierungskappe 23, wodurch eine fertigungs- und montagetechnisch einfache wie auch sehr zuverlässige, und gleichzeitig auch sehr kostengünstige Lagesicherung beider Dichtkörper, d.h. des Elastomerdichtkörpers 8 und des Kunststoffdichtkörpers 9, am und im Dichtungsgehäuse 5 gewährleistet ist.

Wesentlich ist weiterhin, dass der an den Dichtkörperpositionierzylinder 27 anschließende Anlagebereich 32 des Elastomerdichtkörpers 8 flächig am Stützsteganpressbund 19 anliegt, wobei der Elastomerdichtkörpers 8 nach dem Anlagebereich 32 im Bereich des Stützbundrandes 20 in einen frei tragenden Stützbogensteg 33 übergeht, an dessen druckraumseitigem Ende dann am Elastomerdichtkörper 8 die Elastomerdichtlippe 10 angeordnet ist, welche an der Welle 3, oder an einer auf der Welle 3 drehfest angeordneten Laufhülse 12, anliegt.

Diese Laufhülse 12 besteht aus Edelstahl und weist eine Oberflächenhärte größer 1120 HV auf.

Im vorliegenden Ausführungsbeispiel beträgt die Oberflächenhärte der Laufhülse 12 1450 HV.

Der Einsatz derartiger Laufhülsen 12 mit hoher Oberflächenhärte bewirkt, dass die Welle 3 wesentlich kostengünstiger hergestellt werden kann, da die Laufhülsen 12 separat gefertigt und auch nur im Bereich der Radialwellendichtung auf die Wellen 3 aufgezogen werden. Dadurch wird eine Korrosion unter den Dichtlippen vermieden, der Verschleiß im Bereich der Dichtlippe, selbst wenn Fremdpartikel unter der Dichtlippe "eingefangen werden", wird minimiert, d.h. eine Riefenbildung auf den Laufflächen wird stark vermindert, wodurch die Laufflächen im realen Einsatz über lange Zeit nahezu verschleißfrei, d.h. für die Dichtwirkung unbeschädigt bleiben. Erfindungswesentlich ist, dass etwa mittig über dem Stützbogensteg 33 am Außenumfang des Elastomerdichtkörpers 8 eine Außennut 34 angeordnet ist, in der eine Schnurfeder 35 angeordnet ist, die sowohl den Anlagebereich 32 des Elastomerdichtkörpers 8 an den Stützsteganpressbund 19, wie auch gleichzeitig die linienförmige Elastomerdichtlippe 10 gegen die drehfest auf der Welle 3 angeordnete Laufhülse 12 presst.

Diese erfindungsgemäße Anordnung einer Schnurfeder 35 etwa mittig über dem Stützbogensteg 33 am Außenumfang des Elastomerdichtkörpers 8 bewirkt eine optimale Kraftaufteilung der Federvorspannkraft F_{FV} einerseits in die auf den Anlagebereich 32 des Elastomerdichtkörpers 8 einwirkende Stützkraft F_{S} die den Anlagebereich 32 des Elastomerdichtkörpers 8 an den Stützsteganpressbund 19 presst, und andererseits in die auf die linienförmige Elastomerdichtlippe 10 definiert einwirkende Lippenanpresskraft F_{L} ,welche die Elastomerdichtlippe 10 optimal gegen die drehfest auf der Welle 3 angeordnete Laufhülse 12 presst.

Diese Anordnung bewirkt, dass über die gesamte Laufzeit der erfindungsgemäßen Radialwellendichtung eine optimale Schwingungsdämpfung der Elastomerdichtlippe 10 bei optimaler Dichtlippenvorspannung mit minimalem Reibungsverlusten gewährleistet werden kann, wodurch die Reibung und der Verschleiß minimiert, die Unterdruckstabilität über die gesamte Lebensdauer der Radialwellendichtung gewährleistet und Leckagen über/an den Abdichtstellen zwischen der Elastomerdichtlippe 10 und der Laufhülse 12 vermieden werden.

Ein weiteres Merkmal der Erfindung besteht darin, dass zwischen dem Stützkörper 13, dem Kunststoffdichtkörper 9 und der Welle 3 bzw. der Laufhülse 12 eine Schmierkammer 36 angeordnet ist, in der ein Schmiermedium 37, im vorliegenden Ausführungsbeispiel ein PTFE-Fett angeordnet ist.

Dadurch wird bewirkt, dass ein Ankleben der Dichtlippe während des Transportes zum Endkunden vermieden und die Dichtlippe bei der ersten Inbetriebnahme nicht losgerissen wird, gleichzeitig wird das Einlaufverhalten der Dichtlippen verbessert, die Dichtlippe auch bei Trockentests geschmiert, die Reibtemperatur bei ungünstigen Einsatzbedingungen reduziert und selbst die Stick-Slip-Neigung (Geräusche und Quitschen durch Schwingungsneigung) bei ungünstigen Einsatzbedingungen (wie schlecht schmierende Kühlmittel, hohe Kühlmitteltemperaturen und geringe Drehzahlen, z.B. Leerlaufdrehzahl, in Kombination) verhindert wird.

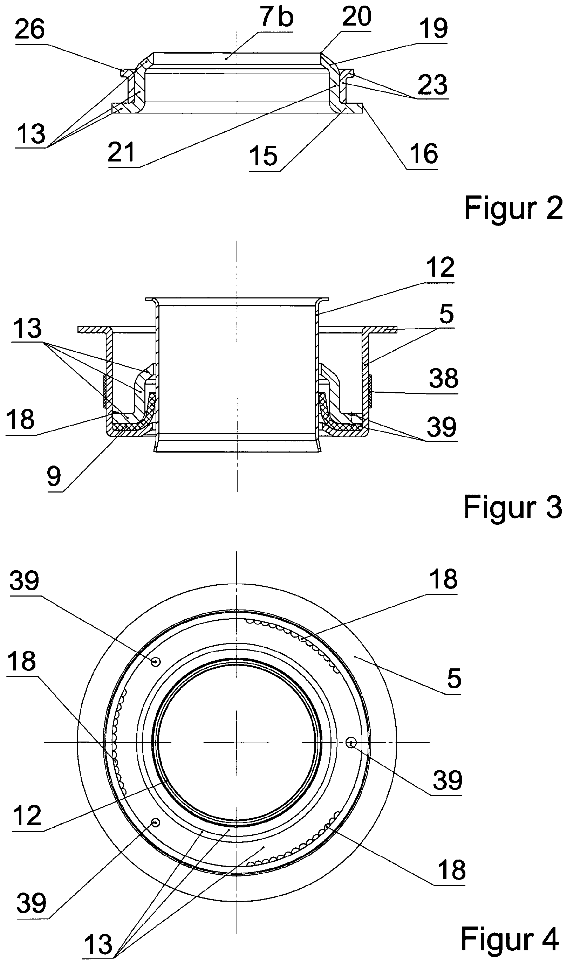

Die Figur 2 zeigt die in das Dichtungsgehäuse 5 eingesetzten Metallbauteile der erfindungsgemäßen Lösung, d.h. den Stützkörper 13 und die Elastomerdichtkörperpositionierungskappe 23, ohne Dichtkörper und ohne Dichtungsgehäuse 5, jedoch zur Veranschaulichung der späteren Montage bereits miteinander durch Presssitz gefügt, in der Seitenansicht, im Schnitt. Die erfindungsgemäße Lösung ermöglicht, wie in der Figur 2 dargestellt, den Einsatz von den in der Figur 2 dargestellten Stanzteilen für den Stützkörper 13 und die Elastomerdichtkörperpositionierungskappe 23. Der Einsatz von Stanzteilen für diese Bauteile ermöglicht eine kostengünstige Fertigung und eine einfache Montage.

Gleichzeitig gewährleistet die erfindungsgemäße Lösung eine sehr zuverlässige und zugleich kostengünstige Lagesicherung beider Dichtkörper, d.h. des Elastomerdichtkörpers 8 und des Kunststoffdichtkörpers 9, am und im Dichtungsgehäuse 5 der erfindungsgemäßen Radialwellendichtung.

In der Figur 3 ist die erfindungsgemäße Radialwellendichtung während der Montage, mit dem in einem Dichtungsgehäuse 5 mit Montagebund, für einen Dichtungssitz mit einem Bohrungsdurchmesser von 20 mm, durch den Stützkörper 13 lagesicher positionierten Kunststoffdichtkörper 9 mit eingesetzter Laufhülse 12, vor der Endmontage, in der Seitenansicht, im Schnitt dargestellt.

Am Stützkörper 13 ist ein Stützkörpersteg 15 mit einem zylindrischen Stützkörperstegaußenrand 16 angeordnet. Der Durchmesser des Stützkörperstegaußenrands 16 weist gegenüber dem Durchmesser der Innenwand 17 des Dichtungsgehäuses 5 ein Übermaß auf, so dass der Stützkörper 13, welcher den Kunststoffdichtkörper 9 gegen die Rückwand 6 presst, mit Presssitz im Dichtungsgehäuse 5 gefügt ist.

Zur Lagesicherung des Kunststoffdichtkörpers 9 am Stützkörper 13 sind am Umfang des Stützkörpersteges 15 Positionierkerben 39 derart angeordnet, dass sich deren Mitnahmekegel im Kunststoffdichtkörper 9 verankern.

Am Außenumfang des Dichtungsgehäuses 5 ist umlaufend Dichtlack 38 angeordnet.

Dieser Dichtlack 38 bewirkt, dass Unebenheiten in der Gehäusebohrung ausgeglichen, und die statische Dichtheit zwischen dem Arbeitsgehäuse 2 und dem Dichtungsgehäuse 5 über die gesamte Laufzeit der Radialwellendichtung gewährleistet ist.

Die Figur 4 zeigt die Draufsicht auf den in der Figur 3 dargestellten Montagezustand der erfindungsgemäßen Radialwellendichtung.

Diese Darstellung zeigt, dass der fest mittels Presssitz im Dichtungsgehäuse 5 verankerte Stützkörper 13 mittels mehrerer gleichmäßig über den Umfang verteilter, im Randbereich, zwischen dem Stützkörper 13 und dem Dichtungsgehäuse 5, angeordneten Laser-Schweißnaht/nähte 18 auch stoffschlüssig mit dem Dichtungsgehäuse 5 verbunden ist.

Dieser fest im Dichtungsgehäuse 5 eingepresst verspannte, und so bereits lagefixierte Stützkörper 13 wird erfindungsgemäß in diesem verspannten Zustand nachfolgend noch, wie in den Figuren 3 und 4 dargestellt, mit dem Dichtungsgehäuse 5 laserverschweißt. Durch diese zusätzliche stoffschlüssige Verbindung mittels Laserverschweißung wird die Lage-Sicherheit noch um ein Vielfaches erhöht, so dass der laserverschweißte Stützkörper 13 sehr hohe Beanspruchungen aufzunehmen vermag.

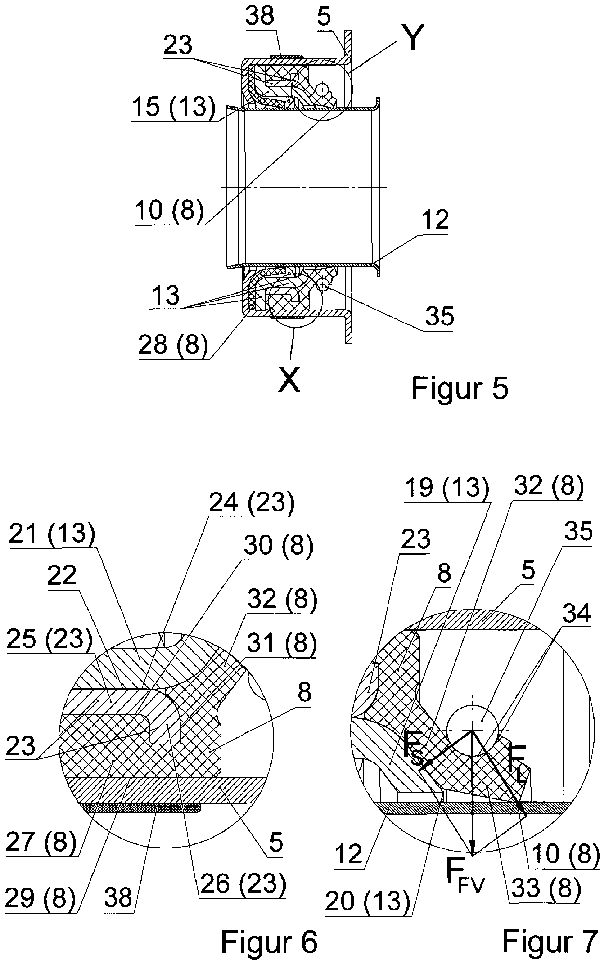

In der Figur 5 ist die in der Figur 1 dargestellte (in einem Dichtungsgehäuse 5 mit Montagebund, für einen Dichtungssitz mit einem Bohrungsdurchmesser von 20 mm angeordnete Radialwellendichtung) im Endmontagezustand/Auslieferungszustand, d.h. vor dem Einbau in ein Arbeitsgehäuse 2 einer Kühlmittelpumpe, in der Seitenansicht im Schnitt dargestellt. Am Außenumfang des Dichtungsgehäuses ist umlaufend Dichtlack 38 angeordnet, um nach dem Einbau in das Arbeitsgehäuse 2 statische Leckagen (ob Luft und/oder Kühlmittel) zwischen dem Arbeitsgehäuse 2 und dem Dichtungsgehäuse 5 zu vermeiden.

In der Figur 6 ist die Einzelheit X der erfindungsgemäßen Radialwellendichtung gemäß Figur 5 dargestellt.

Diese Einzelheit zeigt den am Stützkörper 13 angeordneten Positionierzylinder 21 mit dem Positionierzylinderaußenmantel 22 auf dem erfindungsgemäß mittels Presssitz, der zylindrische Lagesicherungskappeninnenmantel 24 der Elastomerdichtkörperpositionierungskappe 23 angeordnet ist, welche aus der Zylinderkappe 25 und einem druckraumseitig starr an diesem angeordneten Dichtkörperaufnahmesteg 26 besteht. Außen auf der Zylinderkappe 25 ist der Innenmantel 30 des Dichtkörperpositionierzylinders 27 des Elastomerdichtkörpers 8 radial verspannt.

Dieser ist gleichzeitig mittels eines, am Innenmantel 30 des Elastomerdichtkörpers 8 angeordneten, dem Dichtkörperaufnahmesteg 26 zugeordneten, Hinterschnitts 31 in den Dichtkörperaufnahmesteg 26 eingeknüpft.

Dadurch wird bewirkt, dass der Elastomerdichtkörper 8 mit der Elastomerdichtlippe 10 über die gesamte Lebensdauer der erfindungsgemäßen Radialwellendichtung zuverlässig auch axial gesichert ist.

Der auf der Elastomerdichtkörperpositionierungskappe 23 angeordnete Elastomerdichtkörper 8 ist in den Figuren 1, 5, 8, 9 und 10 dargestellt und liegt im Endmontagezustand mit seiner Stirnseite 28 leckagedicht am Stützkörpersteg 15 an.

Die Figur 7 zeigt die Einzelheit Y der erfindungsgemäßen Radialwellendichtung gemäß der Figur 5.

Diese Einzelheit offenbart, dass erfindungsgemäß etwa mittig über dem Stützbogensteg 33 am Außenumfang des Elastomerdichtkörpers 8 eine Außennut 34 angeordnet ist, in der eine Schnurfeder 35 angeordnet ist, deren am Außenumfang des Elastomerdichtkörpers 8 angreifende Federvorspannkraft F_{FV} einerseits den Anlagebereich 32 des Elastomerdichtkörpers 8 mit einer Stützkraft F_{S} an den Stützsteganpressbund 19, wie aber auch gleichzeitig die linienförmige Elastomerdichtlippe 10 mit einer Lippenanpresskraft F_{L} gegen die drehfest auf der Welle 3 angeordnete Laufhülse 12 presst.

Diese erfindungsgemäße Anordnung der Schnurfeder 35 am Außenumfang des Elastomerdichtkörpers 8 mittig über einem erfindungsgemäß frei tragenden bogenförmigen Stützbogensteg 33 bewirkt, dass über die gesamte Laufzeit der erfindungsgemäßen Radialwellendichtung eine optimale Schwingungsdämpfung der Elastomerdichtlippe 10 gewährleistet, und selbst die Stick-Slip-Neigung (Schwingungsneigung) bei ungünstigen Einsatzbedingungen (wie schlecht schmierende Kühlmittel, hohe Kühlmitteltemperaturen und geringe Drehzahlen, wie z.B. die Leerlaufdrehzahl, sowohl einzeln wie auch in deren Kombination) verhindert wird.

Gleichzeitig bewirkt die erfindungsgemäße Radialwellendichtung eine optimale Dichtlippenvorspannung, die auch dem Druckverformungsrest (DVR) des Elastomers entgegenwirkt, und die sowohl die Reibung wie auch der Verschleiß minimiert, wobei selbst bei evtl. doch eintretendem Verschleiß ein selbsttätiges optimales Nachstellen der Kontaktzone durch die Schnurfeder 35 erfolgt, so dass zudem auch die Unterdruckstabilität über die gesamte Lebensdauer der Radialwellendichtung gewährleistet ist und jegliche Leckagen über/an den Abdichtstellen zwischen der Elastomerdichtlippe 10 und der Laufhülse 12 vermieden werden.

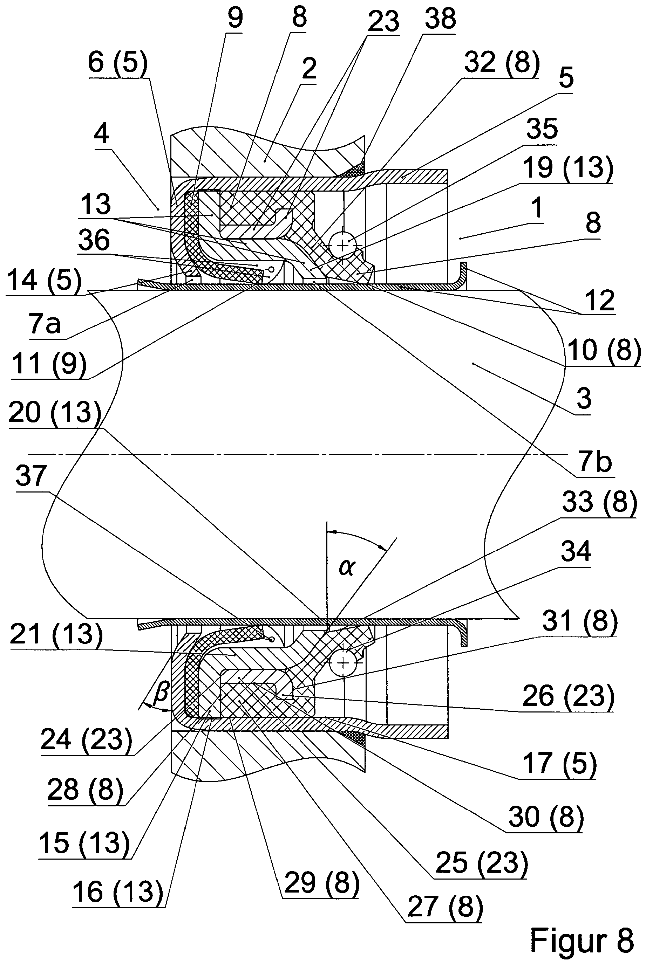

Die Figur 8 zeigt die in einem anderen Dichtungsgehäuse 5 ohne Montagebund, für einen Dichtungssitz mit einem Bohrungsdurchmesser von 20 mm, angeordnete erfindungsgemäße Radialwellendichtung im Endmontagezustand/Auslieferungszustand.

Diese Bauform des Dichtungsgehäuses 5 wird in Wasserpumpen eingesetzt bei denen der Bauraum der Dichtung auf unter 21 mm begrenzt ist. Bei dieser Bauform wurde das Dichtungsgehäuse 5 axial aufgeweitet, um so das Dichtungsgehäuse 5 leckagesicher in das Arbeitsgehäuse 2 einzupressen.

Alle bereits in Verbindung mit der Figur 1 erläuterten erfindungswesentlichen Merkmale sind auch wesentlicher Bestandteil dieser Ausführungsform, so dass die zur Figur 1 getroffenen Aussagen auch auf die Figur 8 zutreffen.

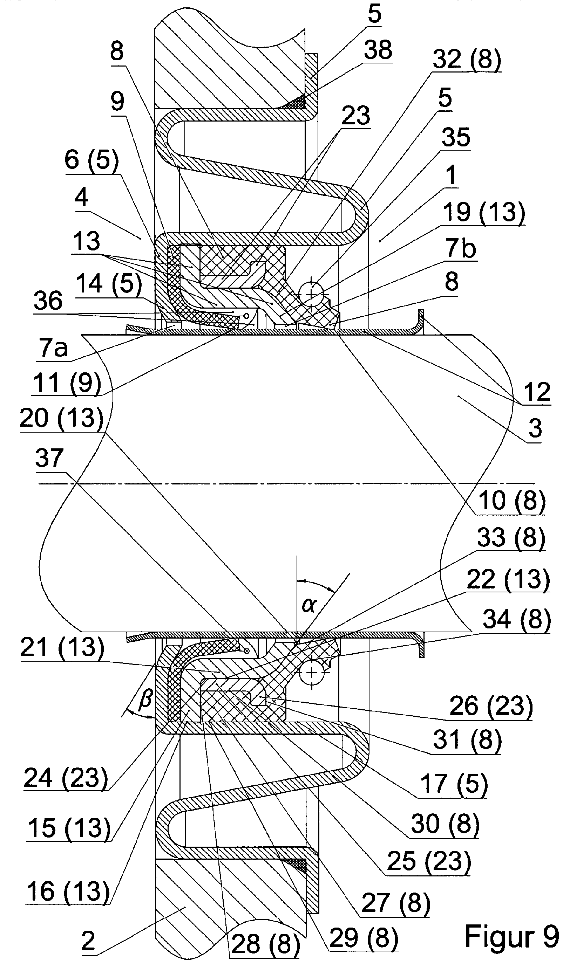

Die Figur 9 zeigt die in einem Dichtungsgehäuse 5 mit Montagebund, für einen Dichtungssitz mit einem Bohrungsdurchmesser von 30 mm, für Gehäuse mit geringer Materialstärke, d.h. für geringe Bauraumtiefe, angeordnete, erfindungsgemäße Radialwellendichtung im Endmontagezustand/Auslieferungszustand.

Diese Bauform des Dichtungsgehäuses 5 wird eingesetzt um klassische Gleitringdichtungen mit einem Standard-Bohrungs-Durchmesser im Arbeitsgehäuse 2 von 30 mm und einer Bautiefe, in Richtung Wasserpumpenlager, von maximal 6 mm durch eine Radialwellendichtung der erfindungsgemäßen Bauform zu ersetzen.

Alle bereits in Verbindung mit der Figur 1 erläuterten erfindungswesentlichen Merkmale sind auch wesentlicher Bestandteil dieser Ausführungsform, so dass die zur Figur 1 getroffenen Aussagen auch auf die Figur 9 zutreffen.

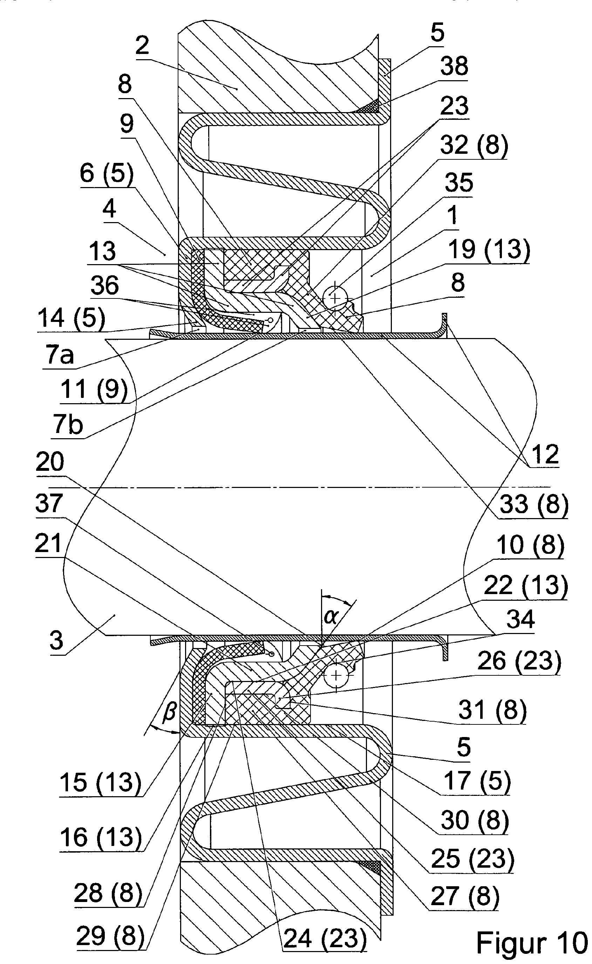

Die Figur 10 zeigt die in einem Dichtungsgehäuse 5 mit Montagebund, für einen Dichtungssitz mit einem Bohrungsdurchmesser von 30 mm, angeordnete, erfindungsgemäße Radialwellendichtung im Endmontagezustand/Auslieferungszustand.

Diese Bauform des Dichtungsgehäuses 5 wird eingesetzt um klassische Gleitringdichtungen mit einem Standard-Bohrungs-Durchmesser im Arbeitsgehäuse 2 von 30 mm und einer Bautiefe, in Richtung Wasserpumpenlager, von 8 mm und mehr durch eine Radialwellendichtung der erfindungsgemäßen Bauform zu ersetzen.

Alle bereits in Verbindung mit der Figur 1 erläuterten erfindungswesentlichen Merkmale sind auch wesentlicher Bestandteil dieser Ausführungsform, so dass die zur Figur 1 getroffenen Aussagen auch auf die Figur 10 zutreffen.

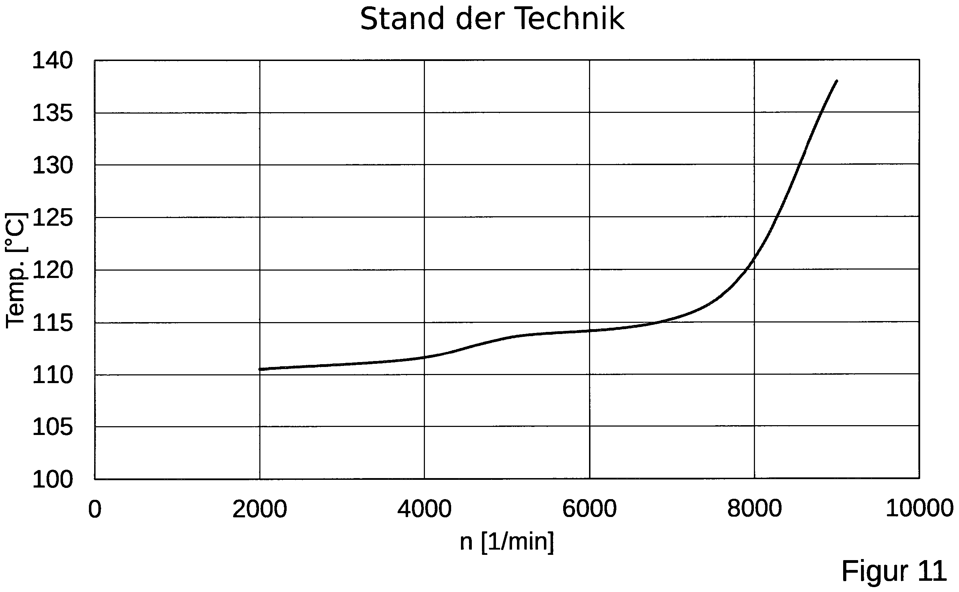

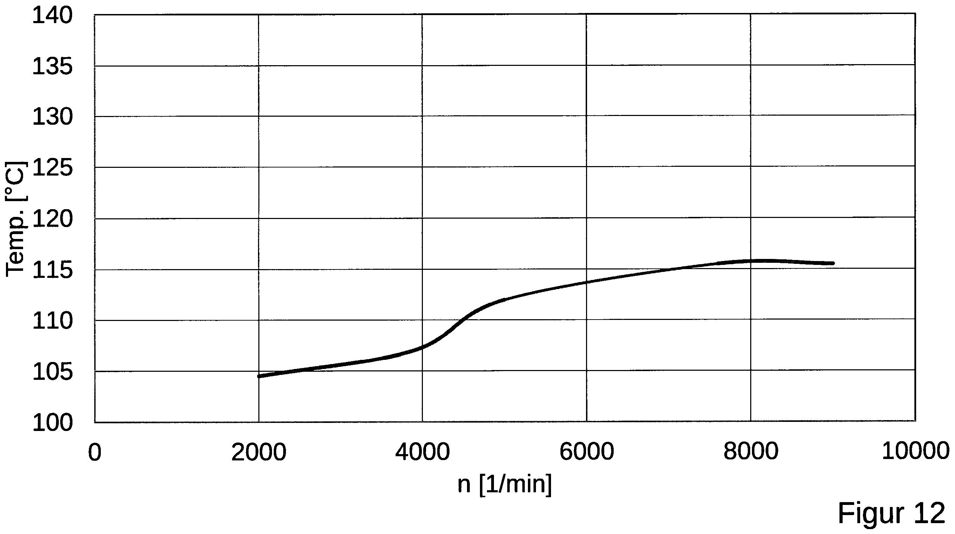

In den Figuren 11 und 12 sind die Messergebnisse eines Versuchsaufbaus grafisch dargestellt, bei denen unter den gleichen Versuchsbedingungen mit der Radialwellendichtung nach der EP 2817539 B1 der in der Figur 11, und mit der erfindungsgemäßen Radialwellendichtung der in Figur 12 dargestellte Temperaturverlauf über die Drehzahl ermittelt wurde.

Beide Male wurde das selbe Kühlmittel eingesetzt.

Die Temperaturmessung erfolgte dabei (von hinten) direkt an der Elastomerdichtlippe bei einem Druck von 2,5 bar im Druckraum, dem Kühlmittelraum, und bei einer Kühlmitteltemperatur von 107 °C, stets nach jeweils 3 Minuten Dauerlauf, mit der angegebenen Drehzahl.

Die Figur 11, welche den Temperaturverlauf über die Drehzahl bei Einsatz der Radialwellendichtung nach der EP 2817539 B1 zeigt, zeigt dass am wasserseitig angeordneten Elastomerdichtkörper 8, ab Drehzahlen von über ca. 7.000 U/min bereits ein deutlicher Temperaturanstieg an der Dichtung eintritt.

Es wird davon ausgegangen, dass dies darauf zurückzuführen ist, dass bei der in der EP 2817539 B1 eingesetzten Elastomerdichtlippe bei höheren Drehzahlen, d.h. bei Drehzahlen im Bereich von 7.000 U/min, der Flüssigkeitsfilm zwischen der Welle 3 bzw. der Hülse 12 und der Elastomerdichtlippe 10 abreißt, und dies dann mit zunehmender Drehzahl zu einen mit der Erhöhung der Drehzahl deutlich zunehmenden Temperaturanstieg an der Elastomerdichtlippe 10 führt.

Die Figur 12 zeigt den mit dem selben Versuchsaufbau ermittelten Temperaturverlauf über die Drehzahl, jedoch nun bei Einsatz der erfindungsgemäßen Radialwellendichtung.

Die Gegenüberstellung beider Diagramme belegt sehr eindeutig, dass mit der erfindungsgemäßen, in der Figur 7 im Detail dargestellten neuartigen Bauform der Elastomerdichtlippe, insbesondere bei höheren Drehzahlen, die Verlustleistungen, d.h. die Reibungsverluste, gegenüber dem gegenwärtigen Stand der Technik sehr deutlich gesenkt und damit gleichzeitig die Zuverlässigkeit wie auch die Lebensdauer der erfindungsgemäßen Radialwellendichtung wesentlich erhöht werden konnte.

Mittels der erfindungsgemäßen Lösung ist es somit gelungen eine Radialwellendichtung zur Abdichtung einer aus einem mit einem fluiden Medium gefüllten Raum herausgeführten rotierenden Welle gegenüber der Atmosphäre zu entwickeln, welche auch in Kühlmittelpumpen, unter Einsatz von dünnflüssigen, wasserbasierenden Kühlmitteln mit leicht schmierenden Zusätzen, die vorgenannten Nachteile des Standes der Technik beseitigt, und die Reibungsverluste wie auch die Leckageverluste gegenüber dem gegenwärtigen Stand der Technik deutlich senkt, die Zuverlässigkeit wie auch die Lebensdauer deutlich erhöht, zudem Stillstandsleckagen zuverlässig vermeidet, so dass auch nach längerer Einsatzzeit noch eine "luftfreie" Vakuumbefüllung von Kühlmittelpumpen möglich ist, gleichzeitig ist die neuartige Radialwellendichtung fertigungstechnisch einfach herstell- und montierbar, so dass sich auch die Fertigungs- und Montagekosten in der Endfertigung deutlich reduzieren.

### Bezugszeichenzusammenstellung

- 1: Druckraum
- 2: Arbeitsgehäuse
- 3: Welle
- 4: Außenraum
- 5: Dichtungsgehäuse
- 6: Rückwand
- 7a: Wellendurchtrittsbohrung in der Rückwand 6
- 7b: Wellendurchtrittsbohrung im Stützkörper 13
- 8: Elastomerdichtkörper
- 9: Kunststoffdichtkörper
- 10: Elastomerdichtlippe
- 11: Kunststoffdichtlippe
- 12: Laufhülse
- 13: Stützkörper
- 14: Dichtkörperanlagebund
- 15: Stützkörpersteg
- 16: Stützkörperstegaußenrand
- 17: Innenwand
- 18: Schweißnaht
- 19: Stützsteganpressbund
- 20: Stützbundrand
- 21: Positionierzylinder
- 22: Positionierzylinderaußenmantel
- 23: Elastomerdichtkörperpositionierungskappe
- 24: Lagesicherungskappeninnenmantel
- 25: Zylinderkappe
- 26: Dichtkörperaufnahmesteg
- 27: Dichtkörperpositionierzylinder
- 28: Stirnseite
- 29: Außenmantel
- 30: Innenmantel
- 31: Hinterschnitt
- 32: Anlagebereich
- 33: Stützbogensteg
- 34: Außennut
- 35: Schnurfeder
- 36: Schmierkammer
- 37: Schmiermedium
- 38: Dichtlack
- 39: Positionierkerbe

- F_{FV}: Federvorspannkraft
- F_{S}: Stützkraft
- F_{L}: Lippenanpresskraft

- α: Anpresskegelwinkel
- β: Anlagekegelwinkel

- n: Drehzahl

Temp. Temperatur

## Patentansprüche

1. Radialwellendichtung zur Abdichtung, einer aus einem mit einem fluiden Medium gefüllten Druckraum (1) eines Arbeitsgehäuses (2) herausgeführten rotierenden Welle (3) gegenüber einem Außenraum (4), der Atmosphäre, mit einem in einer Bohrung des Arbeitsgehäuses (2) angeordneten metallischen Dichtungsgehäuse (5) mit einer Rückwand (6) und einer in dieser Rückwand (6) angeordneten Wellendurchtrittsbohrung (7a), wobei im Dichtungsgehäuse (5) druckraumseitig ein Elastomerdichtkörper (8) mit einer Elastomerdichtlippe (10) und außenraumseitig ein Kunststoffdichtkörper (9) mit PTFE und einer Kunststoffdichtlippe (11) derart angeordnet sind, dass diese Dichtlippen direkt an der Welle (3) oder einer auf der Welle (3) drehfest angeordneten Laufhülse (12) anliegt/anliegen, wobei die beiden Dichtkörper, der Elastomerdichtkörper (8) und der Kunststoffdichtkörper (9), in ihrer Lage gegenüber dem Dichtungsgehäuse (5) mittels mindestens eines mit einer ringförmigen Wellendurchtrittsbohrung (7b) versehenen metallischen Stützkörpers (13) exakt lagepositioniert sind, **dadurch gekennzeichnet,**
- **dass** im Bereich der Wellendurchtrittsbohrung (7a) an der Rückwand (6), ein kegelstumpfförmig in Richtung des Druckraumes (1), unter einem Anlagekegelwinkel β, der im Bereich von 25° bis 38° geneigter Dichtkörperanlagebund (14) angeordnet ist, und
- **dass** am Stützkörper (13) ein Stützkörpersteg (15) mit einem zylindrischen Stützkörperstegaußenrand (16) angeordnet ist, wobei der Durchmesser des Stützkörperstegaußenrands (16) gegenüber dem Durchmesser einer zugeordneten Innenwand (17) des Dichtungsgehäuses (5) ein Übermaß aufweist, so dass der Stützkörper (13), welcher im Endmontagezustand den Kunststoffdichtkörper (9) gegen die Rückwand (6) presst, im Dichtungsgehäuse (5) mit Presssitz gefügt ist, und
- **dass** im Bereich der Wellendurchtrittsbohrung (7b) des Stützkörpers (13), am Stützkörper (13) ein kegelstumpfförmig in Richtung des Druckraumes (1) unter einem Anpresskegelwinkel α im Bereich von 34° bis 39° geneigter Stützsteganpressbund (19) angeordnet ist, der an seinem freien, druckraumseitigen Ende einen Stützbundrand (20) aufweist, und
- **dass** zwischen dem Stützkörpersteg (15) und dem Stützsteganpressbund (19) am Stützkörper (13) ein Positionierzylinder (21) mit einem Positionierzylinderaußenmantel (22) angeordnet ist, und
- **dass** auf dem Positionierzylinderaußenmantel (22) mittels Presssitz ein zylindrischer Lagesicherungskappeninnenmantel (24) einer Elastomerdichtkörperpositionierungskappe (23) angeordnet ist, welche aus einer Zylinderkappe (25) besteht an der druckraumseitig starr ein Dichtkörperaufnahmesteg (26) angeordnet ist, und
- **dass** der Elastomerdichtkörper (8) einen Dichtkörperpositionierzylinder (27) aufweist der mit seinem Innenmantel (30) auf der Zylinderkappe (25) radial so verspannt ist, dass er gleichzeitig mittels einem, am Innenmantel (30) des Elastomerdichtkörpers (8) angeordneten, dem Dichtkörperaufnahmesteg (26) zugeordneten, Hinterschnitt (31) am Dichtkörperaufnahmesteg (26) eingeknüpft ist, und
- **dass** der auf der Elastomerdichtkörperpositionierungskappe (23) angeordnete Elastomerdichtkörper (8) im Endmontagezustand mit seiner Stirnseite (28) am Stützkörpersteg (15) so anliegt, dass der am Dichtkörperpositionierzylinder (27) angeordnete Außenmantel (29) gleichzeitig im Dichtungsgehäuse (5) elastisch verspannt ist, und
- **dass** der an den Dichtkörperpositionierzylinder (27) anschließende Anlagebereich (32) des Elastomerdichtkörpers (8) flächig am Stützsteganpressbund (19) anliegt, wobei der Elastomerdichtkörper (8) nach dem Anlagebereich (32) im Bereich des Stützbundrandes (20) in einen frei tragenden Stützbogensteg (33) übergeht, an dessen druckraumseitigen Ende dann am Elastomerdichtkörper (8) die Elastomerdichtlippe (10) angeordnet ist, welche an der Welle (3), oder an einer auf der Welle (3) drehfest angeordneten Laufhülse (12) anliegt, und
- **dass** mittig über dem Stützbogensteg (33) am Außenumfang des Elastomerdichtkörpers (8) eine Außennut (34) angeordnet ist, in der eine Schnurfeder (35) angeordnet ist, die sowohl den Anlagebereich (32) des Elastomerdichtkörpers (8) an den Stützsteganpressbund (19), wie auch gleichzeitig die Elastomerdichtlippe (10) gegen die Welle (3) bzw. die drehfest auf der Welle (3) angeordnete Laufhülse (12) presst, und
- **dass** zwischen dem Stützkörper (13), dem Kunststoffdichtkörper (9) und der Welle (3), bzw. der Laufhülse (12) eine Schmierkammer (36) angeordnet ist, in der ein Schmiermedium (37) angeordnet ist.

2. Radialwellendichtung nach Anspruch 1, **dadurch gekennzeichnet, dass** der Stützkörpersteg (15) des Stützkörpers (13) in diesem gefügten Zustand, mittels einer/mehrerer im Randbereich, zwischen dem Stützkörper (13) und dem Dichtungsgehäuse (5) angeordnete/n Schweißnaht/-nähte (18), somit nicht nur kraftschlüssig sondern zudem auch noch stoffschlüssig mit dem Dichtungsgehäuse (5) verbunden ist.

3. Radialwellendichtung nach Anspruch 2, **dadurch gekennzeichnet, dass** die zwischen dem Stützkörper (13) und dem Dichtungsgehäuse (5) angeordnete/n Schweißnaht/-nähte (18) als Laserschweißnaht/-nähte ausgeführt ist/sind.

4. Radialwellendichtung nach Anspruch 1 bis 3, **dadurch gekennzeichnet, dass** zur Lagesicherung des Kunststoffdichtkörpers (9) am Stützkörper (13), am Umfang des Stützkörpersteges (15), kunststoffdichtkörperseitige Mitnahmekegel angeordnet sind, die beispielsweise von Positionierkerben (39) ausgebildet werden.

5. Radialwellendichtung nach Anspruch 1 bis 4, **dadurch gekennzeichnet, dass** in der Schmierkammer (36) als Schmiermedium (37) ein PTFE-Fett angeordnet ist.

6. Radialwellendichtung nach Anspruch 1 bis 5 mit einer auf der Welle (3) drehfest angeordneten Laufhülse (12), **dadurch gekennzeichnet, dass** die Laufhülse (12) aus Edelstahl besteht und eine Oberflächenhärte größer 1200 HV aufweist.

7. Radialwellendichtung nach Anspruch 1 bis 6, **dadurch gekennzeichnet, dass** am Außenmantel des Dichtungsgehäuses (5), zum Arbeitsgehäuse (2) hin, umlaufend Dichtlack (38) angeordnet ist.

## Claims

1. A radial shaft seal for sealing of a rotating shaft (3) led out of a pressure chamber (1) of a working housing (2) filled with a fluid medium against an outside space (4) of the atmosphere, with a metallic seal housing (5) arranged in a drill hole of the working housing (2), with a rear wall (6) and a shaft penetration bore (7a) in the rear wall (6), wherein an elastomeric sealing member (8) with an elastomeric sealing lip (10) is arranged on the pressure chamber side in the seal housing (5) and a plastic sealing member (9) of PTFE and a plastic sealing lip (11) are arranged on the outer space side of the seal housing (5) in such a way, that these sealing lips abut directly against the shaft (3) or up against a running sleeve (12) secured torque-proof to the shaft (3), wherein the two sealing members, the elastomeric sealing member (8) and the plastic sealing member (9) are situated precisely for their position relative to the seal housing (5), by means of at least one metal bracing member (13), furnished with a ring-shaped shaft penetration bore (7b) in the bracing member (13), **characterized in,**
- **that** a sealing-member contact flange (14) is arranged in the region of the shaft penetration bore (7a) in the rear wall (6), frustoconically in the direction of pressure chamber (1), inclined at contact taper angle β, in the range between 25° to 38°, and
- **that** a bracing-member web (15) with a cylindrical bracing-member-web outer rim (16) is arranged on the bracing member (13), wherein the diameter of the bracing-member-web outer rim (16) has an excessive size in relation to the diameter of an associated inner wall (17) of the seal housing (5), so that the bracing member (13), which presses the plastic sealing member (9) against the rear wall (6) in the final installed state, is joined to the seal housing (5) with a tight fit, and,
- **that** a bracing-web pressing flange (19) is arranged at the bracing member (13) in the region of the shaft penetration bore (7b) of the bracing member (13), frustoconically in the direction of the pressure chamber (1), inclined at a pressing taper angle α in the range between 34° to 39°, which has a bracing-flange rim (20) at its free end on the pressure chamber side, and
- **that** a positioning cylinder (21) is arranged at the bracing member (13) between the bracing-member web (15) and the bracing-web pressing flange (19), with a positioning-cylinder outer jacket (22), and
- **that** a cylindrical position-securing-cap inner jacket (24) of an elastomeric sealing-member positioning cap (23) is arranged at the positioning-cylinder outer jacket (22) by means of a tight fit join, comprising a cylinder cap (25) to which a sealing-member receiving web (26) is fixed rigidly on the pressure chamber side, and
- **that** the elastomeric sealing member (8) has a sealing-member positioning cylinder (27), the inner jacket (30) of which is radially tensioned on the cylinder cap (25) in such a way, that it is simultaneously linked to the sealing-member receiving web (26) by means of an undercut (31) assigned to the sealing-member receiving web (26), disposed on the inner jacket (30) of the elastomeric sealing member (8), and
- **that** in its finally installed state, the elastomeric sealing member (8) arranged on the elastomeric sealing-member positioning cap (23), is positioned with its end face (28) lying against the bracing-member web (15) in such a way, that the outer jacket (29) arranged on the sealing-member positioning cylinder (27) is simultaneously elastically clamped in the seal housing (5), and
- **that**, the contact region (32) of the elastomeric sealing member (8) connecting to the sealing-member positioning cylinder (27) presses against a large surface of the bracing-web pressing flange (19), wherein the elastomeric sealing member (8) transitions into a cantilevered bracing-arch web (33) after the contact region (32) in the region of the bracing-flange rim (20), at the pressure chamber side end of which, the elastomeric sealing lip (10) is then arranged against the elastomeric sealing member (8), which abuts up against the shaft (3), or abuts up against a running sleeve (12), arranged in a torque-proof manner on the shaft (3), and
- **that** an external groove (34) is arranged centrally above the bracing-arch web (33) on the external outer circumference of the elastomeric sealing member (8), in which a cord spring (35) is arranged, which presses both the contact region (32) of the elastomeric sealing member (8) against the bracing-web pressing flange (19), as well as simultaneously pressing the elastomeric sealing lip (10) against the shaft (3) or against the running sleeve (12) arranged torque-proof on the shaft (3), and
- **that** a lubricating chamber (36) is arranged between the bracing member (13), the plastic sealing member (9) and the shaft (3), or the running sleeve (12), in which a lubricating medium (37) is arranged.

2. Radial shaft seal according to Claim 1, **characterized in, that** the bracing-member web (15) of the bracing member (13) in this joined state, is connected by means of one/several weld seam/seams (18) arranged in the edge region, between the bracing member (13) and the seal housing (5), so that the connection with the seal housing (5) is not just friction-locked, but also by a material to material bond.

3. Radial shaft seal according to Claim 2, **characterized in, that** the weld seam/seams (18) arranged between the bracing member (13) and the seal housing (5), is/are implemented as (a) laser-weld seam(s).

4. Radial shaft seal according to Claims 1 to 3, **characterized in, that** driver tapers for positional security of plastic sealing members(9) are arranged on the perimeter of the bracing-member web (15), on the plastic sealing member side to the bracing members (13), which are formed out of positioning notches (39), for example.

5. Radial shaft seal according to Claims 1 to 4, **characterized in, that** a PTFE grease is installed in the lubricating chamber (36) as the lubricating medium (37).

6. Radial shaft seal according to Claims 1 to 5, with a running sleeve (12) fitted torque-proof to the shaft (3), **characterized in, that** the running sleeve (12) is made of stainless steel and has a surface hardness of greater than 1200 HV.

7. Radial shaft seal according to Claims 1 to 6, **characterized in, that** sealing lacquer (38) has been applied circumferentially to the outer jacket of the seal housing (5), facing towards the working housing (2).

## Revendications

1. Joint radial d'étanchéité d'arbre pour l'étanchéité d'un arbre (3) rotatif extrait d'un espace de pression (1) d'un carter de travail (2) rempli d'un matériau fluide et situé vis-à-vis d'un espace extérieur (4), l'atmosphère, avec un carter d'étanchéité (5) métallique disposé dans un perçage du carter de travail (2), avec une paroi arrière (6) et un perçage de passage d'arbre (7a) disposé dans cette paroi arrière (6), un corps d'étanchéité en élastomère (8) avec une lèvre d'étanchéité en élastomère (10) étant disposés dans le carter d'étanchéité (5) du côté de l'espace de pression et un corps d'étanchéité en plastique (9) avec PTFE et une lèvre d'étanchéité en plastique (11) étant disposés dans le carter d'étanchéité (5) du côté de l'espace extérieur de telle manière que ces lèvres d'étanchéité reposent directement sur l'arbre (3) ou sur une douille mobile (12) placée sur l'arbre (3) fixement quant à la rotation, les deux corps d'étanchéité, le corps d'étanchéité en élastomère (8) et le corps d'étanchéité en plastique (9), dans leur positionnement vis-à-vis du carter d'étanchéité (5), étant positionnés de manière exacte dans l'emplacement au moyen d'au moins un corps d'appui (13) métallique pourvu d'un perçage de passage d'arbre (7b), **caractérisé par le fait**
- **que**, dans la zone de perçage de passage d'arbre (7a) sur la paroi arrière (6), une collerette de contact de corps d'étanchéité (14), en forme de cône tronqué, est disposée en direction de l'espace de pression (1) et inclinée sous un angle conique de contact β situé dans une plage allant de 25° à 38°, et
- **que**, sur le corps d'appui (13), une traverse de corps d'appui (15) avec un rebord extérieur de traverse de corps d'appui (16) cylindrique est disposée, le diamètre du rebord extérieur de traverse de corps d'appui (16) présentant un surdimensionnement par rapport au diamètre d'une paroi intérieure (17) affectée du carter d'étanchéité (5), de telle sorte que le corps d'appui (13), lequel presse le corps d'étanchéité en plastique (9) contre la paroi arrière (6) à l'état de montage final, soit intégré dans le carter d'étanchéité (5) avec un ajustage serré, et
- **que**, dans la zone de perçage de passage d'arbre (7b) du corps d'appui (13), sur le corps d'appui (13), un col de presse de traverse d'appui (19), en forme de cône tronqué, est disposé en direction de l'espace de pression (1) et incliné sous un angle conique de pression α situé dans une plage allant de 34° à 39°, lequel col de presse de traverse d'appui (19) présente un rebord de col d'appui (20) sur son extrémité libre du côté de l'espace de pression, et
- **que**, entre la traverse de corps d'appui (15) et le col de presse de traverse d'appui (19) sur le corps d'appui (13), un cylindre de positionnement (21) avec une enveloppe extérieure de cylindre de positionnement (22) est disposé, et
- **que**, sur l'enveloppe extérieure de cylindre de positionnement (22) au moyen d'un ajustage serré, une enveloppe intérieure de couvercle protecteur de position (24) cylindrique d'un couvercle de positionnement de corps d'étanchéité en élastomère (23) est disposée, lequel se compose d'un couvercle cylindrique (25) sur lequel est disposé de manière rigide du côté de l'espace de pression une traverse de réception de corps d'étanchéité (26), et
- **que** le corps d'étanchéité en élastomère (8) présente un cylindre de positionnement de corps d'étanchéité (27), lequel est serré radialement avec son enveloppe intérieure (30) sur le couvercle cylindrique (25) de telle sorte qu'il soit intégré simultanément sur la traverse de réception de corps d'étanchéité (26) au moyen d'une contre-dépouille (31) placée sur l'enveloppe intérieure (30) du corps d'étanchéité en élastomère (8) et attribuée à la traverse de réception de corps d'étanchéité (26), et
- **que** le corps d'étanchéité en élastomère (8) disposé sur le couvercle de positionnement de corps d'étanchéité en élastomère (23) repose à l'état de montage final avec son côté avant (28) sur la traverse de corps d'appui (15), de telle sorte que l'enveloppe extérieure (29) disposée sur le cylindre de positionnement de corps d'étanchéité (27) soit simultanément serrée de manière élastique dans le carter d'étanchéité (5), et
- **que** la zone de contact (32) du corps d'étanchéité en élastomère (8) rattachée au cylindre de positionnement de corps d'étanchéité (27) repose de face à face sur le col de presse de traverse d'appui (19), le corps d'étanchéité en élastomère (8) transitant après la zone de contact (32) dans la zone de rebord de col d'appui (20) dans une traverse de coude d'appui (33) autoportante, sur laquelle extrémité du côté de l'espace de pression est alors disposée la lèvre d'étanchéité en élastomère (10) sur le corps d'étanchéité en élastomère (8), laquelle repose sur l'arbre (3) ou sur une douille mobile (12) placée sur l'arbre (3) fixement quant à la rotation, et
- **que**, au centre au dessus de la traverse de coude d'appui (33) sur le pourtour extérieur du corps d'étanchéité en élastomère (8), une rainure extérieure (34) est disposée, dans laquelle est placé un ressort de compression (35), lequel presse aussi bien la zone de contact (32) du corps d'étanchéité en élastomère (8) sur le col de presse de traverse d'appui (19) que simultanément la lèvre d'étanchéité en élastomère (10) contre l'arbre (3) voire contre la douille mobile (12) placée sur l'arbre (3) fixement quant à la rotation, et
- **que**, entre le corps d'appui (13), le corps d'étanchéité en plastique (9) et l'arbre (3) voire la douille mobile (12), est disposée une chambre de lubrification (36), dans laquelle se trouve un fluide de lubrification (37).

2. Joint radial d'étanchéité d'arbre selon l'exigence 1 **caractérisé par le fait que**, dans cet état assemblé, la traverse de corps d'appui (15) du corps d'appui (13) est reliée au carter d'étanchéité (5) au moyen d'un/de plusieurs joint/s de soudure (18) disposé/s en périphérie, entre le corps d'appui (13) et le carter d'étanchéité (5), et ainsi non seulement par adhérence mais aussi en outre par engagement mécanique.

3. Joint radial d'étanchéité d'arbre selon l'exigence 2 **caractérisé par le fait que** le/les joint/s de soudure (18) disposé/s entre le corps d'appui (13) et le carter d'étanchéité (5) est/sont conçu/s comme joint/s de soudure au laser.

4. Joint radial d'étanchéité d'arbre selon l'exigence 1 à 3 **caractérisé par le fait que**, dans un but de sécurisation de la position du corps d'étanchéité en plastique (9) sur le corps d'appui (13), des cônes d'entraînement sur le côté du corps d'étanchéité en plastique sont disposés sur le pourtour de la traverse de corps d'appui (15), étant par exemple formés par des ergots de positionnement (39).

5. Joint radial d'étanchéité d'arbre selon l'exigence 1 à 4 **caractérisé par le fait qu'**une graisse PTFE servant de fluide de lubrification (37) est placée dans la chambre de lubrification (36).

6. Joint radial d'étanchéité d'arbre selon l'exigence 1 à 5 avec une douille mobile (12) placée sur l'arbre (3) fixement quant à la rotation **caractérisé par le fait que** la douille mobile (12) est en acier inoxydable et présente une dureté de surface supérieure à 1200 HV.

7. Joint radial d'étanchéité d'arbre selon l'exigence 1 à 6 **caractérisé par le fait qu'**un vernis d'étanchéité (38) est appliqué vers le carter de travail (2) sur tout le pourtour sur l'enveloppe extérieure du carter d'étanchéité (5).
